(19) Europäisches Patentamt
European Patent Office
Office européen des brevets

(11) Veröffentlichungsnummer: **0 184 729**
**B1**

(12) # EUROPÄISCHE PATENTSCHRIFT

(45) Veröffentlichungstag der Patentschrift: **09.08.89**

(51) Int. Cl.$^4$: **G 02 B 1/04**, C 08 F226/00

(21) Anmeldenummer: **85115139.9**

(22) Anmeldetag: **29.11.85**

(54) **Weiche kontaktoptische Gegenstände.**

(30) Priorität: **11.12.84 DE 3445094**

(43) Veröffentlichungstag der Anmeldung: **18.06.86 Patentblatt 86/25**

(45) Bekanntmachung des Hinweises auf die Patenterteilung: **09.08.89 Patentblatt 89/32**

(84) Benannte Vertragsstaaten: **AT BE CH DE FR GB IT LI NL SE**

(56) Entgegenhaltungen:
**GB-A- 1 394 056**
**GB-A- 2 010 865**
**GB-A- 2 138 589**

(73) Patentinhaber: **BAYER AG**
**D-5090 Leverkusen 1 Bayerwerk (DE)**

(72) Erfinder: **Wingler, Frank, Dr.**
**Walter-Flex-Strasse 17**
**D-5090 Leverkusen 1 (DE)**
Erfinder: **Geyer, Otto-Christian, Dr.**
**Bahnhofstrasse 12**
**D-6330 Wetzlar (DE)**

**EP 0 184 729 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft weiche kontaktoptische Formkörper, insbesondere Kontaktlinsen und Sklerallinsen, aus vernetzten, hydrophilen Copolymerisaten olefinisch ungesättigter Verbindungen, die neben an sich aus der Kontaktoptik bekannten Monomeren als hydrophilen Monomerbaustein N-Alkyl-N-vinylcarbonsäureamide enthalten. Die erfindungsgemäßen Formkörper haben ein geringeres Wasseraufnahmevermögen als konventionelle Weichlinsen, eine bessere Verträglichkeit bei längeren Tragezeiten, und zeigen keine Tendenz zur Migration von niedermolekularen Bestandteilen.

Weiche hydrophile Kontaktlinsen aus Hydroxyethylmethacrylat (HEMA) wurden in den Jahren 1963 bis 1965 (vor allem in der CSSR) entwickelt. Von Kontaktlinsenträgern wurde dieser Linsentyp wegen des angenehmen Tragegefühls recht schnell akzeptiert. Die mechanische Beanspruchung des Hornhautgewebes ist bei weichen Linsen geringer als bei harten Linsen ; außerdem wird der Stoffwechsel der Hornhaut weniger beeinflußt.

Einfache Anpassung, kurze Eingewöhnung und guter Tragekomfort waren dafür ausschlaggebend, daß weiche hydrophile Linsen sich in kurzer Zeit einen beträchtlichen Marktanteil eroberten.

Nach über einem Jahrzehnt Erfahrungen mit HEMA-Linsen sind jedoch auch Nachteile dieser Materialgruppe bekanntgeworden. So tritt nach längerem Tragen von weichen hydrophilen HEMA-Linsen eine Beeinträchtigung der Verträglichkeit auf. Die Ursachen hierfür sind vor allem in Pflegemitteln enthaltene Konservierungsstoffe, Pflegemittel in Verbindung mit dem Linsenmaterial und schädliche Wirkungen des Materials selbst. HEMA-Materialien können toxische Schäden am Auge hervorrufen. Im klinischen Bild sind solche Schäden, neben den subjektiv vom Kontaktlinsenträger geäußerten Beschwerden, an Hyperämien im Limbusbereich und Verbreiterungen des Randschlingengefäßnetzes mit mehr oder weniger stark ausgebildeten Hornhautvaskularisationen erkennbar. Letzere sind irreversibel und treten nicht selten ohne subjektive Beschwerden auf. Restmonomere und Vernetzer spielen hierbei eine Rolle. Ihr Einfluß auf die biologische Verträglichkeit ist nachweisbar.

Ähnliche Erscheinungen sind auch beim Tragen von Kontaktlinsen aus Copolymeren des HEMA festzustellen.

Seit einiger Zeit werden für hochhydrophile Kontaktlinsen « HEMA-freie » Polymere oder Copolymere wie z. B. Polyvinylpyrrolidon oder Vinylpyrrolidon/Methylmethacrylat-Copolymere verwendet ; sie sollen eine bessere Augenverträglichkeit als HEMA-Linsen aufweisen. Diese sogenannten Hydrogellinsen sind hydrophile Polymernetzwerke auf Basis wasserlöslicher Monomere, die in der Lage sind, 25 bis über 70 Gew.-% Wasser, bezogen auf die hydratisierte Form, aufzunehmen und die infolge der Wasseraufnahme erweichen. Unter den wasserlöslichen Monomeren haben die N-Vinyllactame in Kombination mit PolyallylVernetzern eine bedeutende Rolle gewonnen. Zum Stand der Technik seien beispielsweise die US-Patentschrift 4 158 089 und die Europäischen Patentschriften 79 720, 79 721, 106 650 sowie Shell Polym. 7 (1983), N.3, S. 69-71 genannt. Weiche Hydrogellinsen besitzen gegenüber Linsen aus harten und halbharten Materialien mit geringem Wasseraufnahmevermögen, z. B. Polymethylmethacrylat, Polysilylmethacrylaten, Celluloseacetobutyrat u. a., anfänglich auf Grund ihrer Weichheit und Anschmiegsamkeit einen höheren Tragekomfort, haben aber den Nachteil, daß sie mechanisch leicht zu beschädigen sind. Zur Erhöhung der Zugfestigkeit wurde daher der Vorschlag gemacht, der Monomermischung 0,9 bis 5 Gew.-% Methacrylsäure zuzusetzen (siehe die Europäische Patentschrift Nr. 106 650). Restliche monomere Methacrylsäure besitzt jedoch in Kontaktlinsenmaterialien eine hohe toxische Wirkung, so daß nach einem Weg gesucht werden muß, eine hohe mechanische Festigkeit ohne Zusatz von Methacrylsäure zu erreichen.

Bei Linsen aus N-Vinyllactam-Monomer enthaltenden Polymeren beobachtet man häufig nach längerem Tragen eine leichte Eintrübung sowie eine Braunverfärbung. Hydrogellinsen haben darüber hinaus den Nachteil, daß sie leicht zu beschädigen sind, einer intensiven Pflege bedürfen, und Stoffwechselprodukte Pflegemittel sowie Bakterien anlagern und aufnehmen können.

In den letzten Jahren sind neue Linsen aus harten und halbharten Materialien, z. B. Polysilylmethacrylaten, Celluloseacetobutyrat u. a., mit geringem Wasseraufnahmevermögen entwickelt worden, die inzwischen einen beträchtlichen Marktanteil erringen konnten.

Gute Verträglichkeit, einfache Pflege und gute optische Eigenschaften des Materials sind hierfür ausschlaggebend.

Obwohl die Entwicklung dieser Linsenmaterialien positiv zu bewerten ist, besteht seit langem der Wunsch nach einem weichen, kautschukelastischen Material geringerer Wasseraufnahme, insbesondere für VT (verlängerte Tragezeit)-Linsen. Dieser Wunsch konnte zum Teil mit Linsen aus Silikonkautschuk erfüllt werden. Bei der Silikonlinse treten jedoch Probleme mit der Benetzbarkeit auf. Sie muß darüber hinaus in einem speziellen Herstellungsprozeß gegossen werden. Das kostengünstigere Drehverfahren ist bei Silikonkautschuk nicht anwendbar.

Es wurde gefunden, daß man ein zur Herstellung von kontaktoptischen Formkörpern geeigneten Copolymer erhält, wenn man bei der Herstellung des vernetzten Copolymerisats als hydrophiles Monomer ein N-Alkyl-N-vinylcarbonsäureamid, gegebenenfalls neben anderen hydrophilen Monomeren, mitverwendet. Dieses Material vereinigt in sich Vorteile der harten Materialien, wie gute optische Eigenschaften, relativ geringes Wasseraufnahmevermögen, geringer Pflegeaufwand und Herstellbarkeit

dünner Linsen infolge der mechanischen Stabilität des Materials, und Vorteile der weichen, kautschukelastischen Materialien, wie geringe mechanische Belastung der Augengewebe, hoher Tragekomfort.

Gegenstand der vorliegenden Erfindung sind kontaktoptische Formkörper, insbesondere Kontaktlinsen und Skleralinsen, aus Wasser aufnehmenden, vernetzten Copolymerisaten olefinisch ungesättigter Monomere, welche dadurch gekennzeichnet sind, daß das Copolymerisat 5 bis 55 Gew.-%, vorzugsweise 8 bis 40 Gew.-%, besonders bevorzugt 10 bis 35 Gew.-%, eines N-Vinylamids der allgemeinen Formel

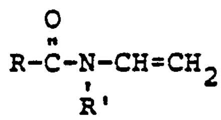

in welcher R und R′ unabhängig voneinander für $C_1$-$C_4$-Alkylgruppen, vorzugsweise Methyl, stehen, einpolymerisiert enthält.

Erfindungsgemäß sind die N-Methyl-, N-vinylamide von Essigsäure, Propionsäure und Buttersäure bevorzugt. Besonders bevorzugt ist das N-Methyl-, N-vinylacetamid.

Neben den kennzeichnenden Monomeren können bei der Herstellung des Copolymerisats in der Kontaktoptik an sich bekannte Monomere eingesetzt werden, wobei aliphatische, cycloaliphatische, aromatische und araliphatische Methacrylsäureester mit 1 bis 8 C-Atomen im Esterteil bevorzugt sind. Beispiele hierfür sind Methyl-, Ethyl-, n-, i- und t-Butyl-, Cyclohexyl-, Benzyl- und Phenylmethacrylat, insbesondere Methylmethacrylat und die Butylmethacrylate. Eine weitere bevorzugte Klasse von Monomeren sind die oben erwähnten Vinyllactame, insbesondere N-Vinylpyrrolidon.

Beispiele für weitere an sich bekannte Monomere sind allgemein die $C_1$-$C_{12}$-Alkyl- oder Cycloalkylester der Acrylsäure oder Methacrylsäure ; Methacrylsäure ; Acrylsäure ; Monohydroxy- oder Dihydroxy-$C_2$-$C_6$-alkylester der (Meth)-acrylsäure sowie deren Alkylether wie z. B. 2-Hydroxyethylmethacrylat, 2-Hydroxyethylacrylat, 2,3-Dihydroxypropylmethacrylat, 1,4-Butandiol-monoacrylat, 2-Ethoxyethyl-methacrylat ; Glycidylmethacrylat ; Vinylacetat, Vinyllaurat, Vinylpropionat, Vinylversat, sowie Methacrylsäure-2-oxyethylethylester.

Die erfindungsgemäß einzusetzenden Copolymerisate müssen vernetzt sein.

Die Vernetzung kann in an sich bekannter Weise, z. B. durch Einwirkung hochenergetischer Strahlung, z. B. Elektronenstrahlen, auf das fertige Copolymerisat oder durch Mitverwendung von 0,01 bis 3 Gew.-%, bevorzugt 0,1 bis 2 Gew.-%, insbesondere 0,2 bis 1 Gew.-%, an mindestens 2 olefinisch ungesättigte Gruppen aufweisenden Vernetzern bei der Copolymerisation bewirkt werden.

Erfindungsgemäß geeignete Vernetzer sind A) (Meth)acrylester-Vernetzer und/oder B) Vinyl- oder Allyl-Vernetzer. Die Vernetzer A) sind an sich bekannte Verbindungen, welche neben einer (Meth)acrylestergruppe noch mindestens eine weitere gleiche oder verschiedene olefinisch ungesättigte Gruppe aufweisen. Hierzu gehören Acrylsäureoder Methacrylsäureester von mehrfunktionellen Alkoholen, wie z. B. Ethylenglykoldimethylacrylat, Propylenglykoldimethacrylat, Diethylenglykoldimethacrylat, Triethylenglykol-dimethacrylat, Polyethylenglykoldimethacrylat, 1,4-Butandiol-dimethacrylat, 1,6-Hexandiol-dimethacrylat, Trimethylolpropantrimethacrylat, Pentaerythrittri- und tetramethacrylat, Methyl-1,5-pentandiol-dimethacrylat, Dihydrodicyclopentadienylmonomethacrylat, Allylmethacrylat, Vinylmethacrylat, Bisphenol-A-dimethacrylat, sowie die entsprechenden Acrylsäureester.

Die Vernetzer B) weisen mindestens zwei olefinisch ungesättigte Gruppen (Vinyl- oder Allylgruppen), jedoch keine (Meth)acrylestergruppierung auf. Beispiele für solche, an sich bekannte, Monomere sind Butandiol-divinylether, Divinylethylenharnstoff, Divinylpropylenharnstoff, Divinyladipat, Divinylbenzol, Divinylphthalat, Triallylcyanurat, Triallylisocyanurat, Diethylenglykol-diallylcarbonat, Diallylmaleat, Diallylitaconat, Trimethylolpropan-di- und Triallylether, Triallyltrimellitat, N, N-Diallylmelamine, etc.

Vorzugsweise werden bei der Copolymerisation sowohl Vernetzer D) als auch Vernetzer E) in einem Gewichtsverhältnis von 1 : 3 bis 3 : 1, bevorzugt 1 : 2 bis 2 : 1, insbesondere ca. 1 : 1, eingesetzt. Die Kombination der beiden Vernetzertypen ist vorteilhaft für die Transparenz und Radienstabilität der aus dem Copolymerisat gefertigten Linsen und Schalen und führt dazu, daß die Materialien nur sehr geringe Anteile (< 0,5 Gew.-%) an wasserextrahierbaren Anteilen enthalten.

Die vernetzte Copolymerisation der olefinisch ungesättigten Monomeren kann nach herkömmlichen Techniken der radikalischen Polymerisation erfolgen, z. B. ausgelöst durch Wärme, Licht oder durch in Radikale zerfallende Initiatoren. Bevorzugt ist die Lichtpolymerisation, wie sie ausführlich in DE-OS 3 300 345 und Int. Chim. 1983, Nr. 242, S. 121-126, beschrieben ist. Die Polymerisation kann dabei als sogenannte Blockpolymerisation in Plattenkammern, Glasröhren oder Kunststoffnäpfchen durchgeführt werden. Eine bevorzugte Ausführungsform ist die Polymerisation der Bestandteile in Kunststoffnäpfchen aus Polyolefinen, wie z. B. Polyethylen, Polypropylen, Polymethylpenten-1, Polyamiden oder Polyacetalen. Die Näpfchen können die für einen Rohling oder auch für die fertige Linse entsprechende Gestalt haben. Die Polymerisation kann auch unter Zusatz von Ethylenglykol erfolgen, das später mit Wasser ausgewaschen wird.

Je nach Anteil der hydrophilen Monomerbausteine im Copolymerisat kann dessen Wasseraufnahmevermögen in weiten Grenzen variiert werden, z. B. zwischen 6 und 70 Gew.-%, bezogen auf hydratisierten Zustand. Gegenüber herkömmlichen Weichlinsen haben die erfindungsgemäßen Produkte jedoch den Vorteil, daß sie auf ein geringeres Wasseraufnahmevermögen eingestellt werden können, und trotzdem auf dem Auge den angestrebten Tragekomfort einer Weichlinse aufweisen.

Das erfindungsgemäß zu verwendende Material ist hervorragend geeignet zur Herstellung von dünnen bis sehr dünnen VT-Linsen. Infolge der geringen Wasseraufnahme findet bei der Hydratisierung nur eine geringe Dickenzunahme statt. Unter dünnen bis sehr dünnen Linsen versteht man Linsen mit einer Mittendicke von 0,04 bis 0,15 mm bei Konstruktion für Minuslinsen (zur Korrektur von Kurzsichtigkeit), bzw. von 0,08 bis 0,4 mm bei Pluslinsen (Korrektur von Weitsichtigkeit) und 0,1 bis 0,4 mm bei Aphakielinsen (Korrektur von Linsenlosigkeit). Durch entsprechende Innen-Geometrien (asphärische Bauart) kann ein erhöhter Austausch an Tränenflüssigkeit erzeugt werden, wie es heutzutage bei Hartlinsen schon Stand der Technik ist, und damit die Verträglichkeit auf dem Auge erhöht werden.

Die dünnen bis sehr dünnen Linsen besitzen gegenüber herkömmlichen Linsen mit einer Mittendicke von mehr als 0,15 mm eine erhöhte Durchlässigkeit für Sauerstoff, was sich insbesondere bei verlängertem Tragen von Kontaktlinsen als Vorzug erweist.

Ein weiterer Vorteil der erfindungsgemäßen Weichlinsen besteht darin, daß sie sich auch nach längerem Tragen auf dem Auge nicht eintrüben, sich nicht braun verfärben und neben einer hervorragenden Verträglichkeit auf dem Auge eine besonders gute Radienstabilität und optische Stabilität aufweisen.

Im Gegensatz zu handelsüblichen hydrophilen Kontaktlinsen auf Basis von N-Vinylpyrrolidon enthalten erfindungsgemäße Linsen keine nennenswerten mit Wasser extrahierbaren Anteile (vorzugsweise $< 0,1$ Gew.-%).

Die auch in den nachstehenden Beispielen beschriebene Blockpolymerisation in Plattenkammern ermöglicht erstmals die biologische Chargenprüfung von Weichlinsenmaterialien, da in einem Ansatz größere homogene Platten (vorzugsweise mit mehr als 1 $m^2$ Fläche) hergestellt werden können, aus denen sich eine große Zahl (z. B. mehr als 1 000 Stück) an Rohlingen mit völlig gleicher chemischer Zusammensetzung stanzen lassen.

## Beispiel 1

Monomermischungen der in der nachstehenden Tabelle 1 aufgeführten Zusammensetzung wurden in zylindrischen Näpfchen aus Poly-4-methylpenten-1 mit 12 mm Durchmesser und 4 mm Höhe 6 Tage bei Raumtemperatur mit einer UV-Fluoreszenzlampe bestrahlt. Die erhaltenen Knöpfe (Blanks) wurden danach 6 Stunden bei 80 °C und 2 Stunden bei 120 °C getempert. Aus den Knöpfen wurden durch Drehen und Polieren Kontaktlinsen hergestellt.

Tabelle 1

| Zusammensetzung in Gew.-% | A | B | C | D | E |
|---|---|---|---|---|---|
| n-Butylmethacrylat | 78,99 | - | 53,99 | 73,99 | - |
| iso-Butylmethacrylat | - | 71,99 | - | - | 68,99 |
| N-Methylvinylacetamid | 20 | 25 | 30 | 20 | 30 |
| Methylmethacrylat | - | - | 20 | - | - |
| Vinylversat | - | 2 | - | - | - |
| Methacrylsäure-2-oxi-ethyl-ethylester | - | - | - | 5 | - |
| Ethylenglykoldimethacrylat | 0,5 | 0,5 | 0,5 | 0,5 | 0,5 |
| Triallylcyanurat | 0,5 | - | 0,5 | 0,5 | 0,5 |
| Divinylpropylenharnstoff | - | 0,5 | - | - | - |
| Azodiisobuttersäuredinitril | 0,01 | 0,01 | 0,01 | 0,01 | 0,01 |

Die aus den Materialien A bis E hergestellten Linsen wurden 6 Stunden bei Raumtemperatur in 5-proz. $H_2O_2$-Lösung behandelt und danach 6 Tage mit Ionenaustauschwasser dialysiert. An den hydratisierten Linsen konnten mit der Spaltlampe keine Schlieren, Trübungen oder Lichtstreuung beobachtet werden. Die Eigenschaften der Linsen sind in der Tabelle 2 zusammengestellt :

Tabelle 2

| Linsenmaterial | A | B | C | D | E |
|---|---|---|---|---|---|
| Glasübergangstemperatur im trockenen Zustand, (°C) | 35 | 30 | 40 | 25 | 28 |
| Glasübergangstemperatur im hydratisierten Zustand, (°C) | 22 | 23 | 25 | 15 | 22 |
| Wasseraufnahmevermögen, bez. auf hydratisierten Zustand (Gew.-%) | 5 | 8 | 10 | 8 | 10 |
| Dickenzunahme bei Hydratisierung (%) | 2 | 3,5 | 3,5 | 3,5 | 4 |

Die Prüfung der Linsen im Tierversuch am Kaninchenauge ergab auch nach 21 Tagen ununterbrochenen Tragens eine gute Biokompatibilität des Materials.

Zur Bestimmung der Dickenzunahme wurden fertig gedrehte trockene Linsen 6 Tage in physiologischer Kochsalzlösung bei 20 °C gelagert. Zur Bestimmung der extrahierbaren Anteile wurden die Linsen nach der Lagerung gewaschen, 24 Stunden bei 80 °C getrocknet und zurückgewogen. In jedem Fall betrug der Gewichtsverlust weniger als 0,1 Gew.-%.

Die Radienstabilität betrug ca. 0,05 mm, die Lichtdurchlässigkeit bei 4,5 mm Schichtdicke ca. 90 %.

## Beispiel 2

Monomermischungen der in der nachstehenden Tabelle 3 aufgeführten Zusammensetzung wurden in Glasplattenkammern der Abmessungen 250 × 250 × 5 mm, versehen mit einer Dichtschnur, unter $N_2$ nach sorgfältigem Entgasen im Vakuum gefüllt und 6 Tage mit einer UV-Fluoreszenzlampe bestrahlt. Die Platten wurden 24 Stunden bei 80 °C und danach 2 Stunden bei 140 °C getempert. Aus den Platten wurden Rohlinge vom Durchmesser 12,5 mm gestochen, die 6 Tage in entionisiertem Wasser dialysiert wurden. Nach dem Trocknen der Rohlinge wurden hieraus Kontaktlinsen verschiedener Dicke gedreht und poliert.

| Zusammensetzung in Gew.-% | A | B | C | D | E |
|---|---|---|---|---|---|
| N-Vinylpyrrolidon | 55 | 55 | 50 | 55 | 60 |
| N-Methyl-vinylacetamid | 5 | 10 | 10 | 5 | 5 |
| Methylmethacrylat | 39,99 | 33,99 | 33,99 | 33,99 | 33,99 |
| 2-Hydroxyethylmethacrylat | - | - | 5 | - | - |
| Methacrylsäure-2-oxyethyl-ethylester | - | - | - | 5 | - |
| Ethylenglykol-dimethacrylat | 0,5 | 0,5 | 0,5 | 0,5 | 0,5 |
| Triallylcyanurat | 0,5 | 0,5 | - | 0,5 | 0,5 |
| Divinyladipat | - | - | 0,5 | - | - |
| Azodiisobuttersäure-dinitril | 0,01 | 0,01 | 0,01 | 0,01 | 0,01 |
| Wasseraufnahmevermögen, bezogen auf hydralisierten Zustand (Gew.-%) | 54 | 62 | 68 | 56 | 62 |

Die Messung der Innenradien bei Mittendicken bis zu 0,08 mm ergab gute Radienstabilitäten (Änderungen 0,1 mm). Bei der Prüfung an der Spaltlampe konnten keine Schlieren oder Trübungen gefunden werden. Lichtdurchlässigkeit: 90 % bei 4,7 mm Schichtdicke. Der mit Wasser extrahierbare Anteil lag in allen Fällen unter 0,1 Gew.-%.

Der Tierversuch am Kaninchenauge ergab auch nach 21 Tagen ununterbrochenen Tragens gute biologische Verträglichkeit des Materials mit dem Auge.

## Patentansprüche

1. Kontaktoptische Gegenstände, insbesondere Kontaktlinsen und Sklerallinsen, aus Wasser aufnehmenden, vernetzten Copolymerisaten olefinisch ungesättigter Monomere, dadurch gekennzeichnet, daß das Copolymerisat 5 bis 55 Gew.-% eines N-Vinylamids der allgemeinen Formel

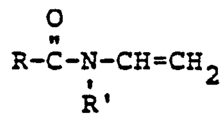

enthält, in welcher R und R′ unabhängig voneinander für $C_1$-$C_4$-Alkylgruppen stehen einpolymerisiert enthält.

2. Kontaktoptische Gegenstände nach Anspruch 1, dadurch gekennzeichnet, daß das Copolymerisat 8 bis 40 Gew.-% des N-Vinylamids enthält.

3. Kontaktoptische Gegenstände nach Anspruch 2, dadurch gekennzeichnet, daß das Copolymerisat 10 bis 35 Gew.-% des N-Vinylamids enthält.

4. Kontaktoptische Gegenstände nach Anspruch 1 bis 3, dadurch gekennzeichnet, daß R für Methyl steht.

5. Kontaktoptische Gegenstände nach Anspruch 1 bis 4, dadurch gekennzeichnet, daß R′ für Methyl steht.

6. Kontaktoptische Gegenstände nach Anspruch 1 bis 5, dadurch gekennzeichnet, daß das Copolymerisat als weiteren Monomerbaustein ein N-Vinyllactam, insbesondere N-Vinylpyrrolidon, enthält.

7. Kontaktoptische Gegenstände nach Anspruch 1 bis 6, dadurch gekennzeichnet, daß das Copolymerisat als weiteren Monomerbaustein einen Methacrylsäureester, insbesondere Methyl-, Ethyl-, Butyl-, Cyclohexyl-, Benzyl- und/oder Phenylmethacrylat, enthält.

8. Kontaktoptische Gegenstände nach Anspruch 1 bis 7, dadurch gekennzeichnet, daß bei der Herstellung des Copolymerisats 0,01 bis 3 Gew.-%, bevorzugt 0,1 bis 2 Gew.-%, an mindestens 2 olefinisch ungesättigte Gruppen aufweisenden Vernetzern mitverwendet wurden.

9. Formkörper nach Anspruch 8, dadurch gekennzeichnet, daß eine Kombination von (Meth)acrylsäureester-Vernetzer und Vinyl- oder Allyl-Vernetzer verwendet wurde.

10. Formkörper nach Anspruch 9, dadurch gekennzeichnet, daß das Gewichtsverhältnis der Vernetzer zwischen 1 : 3 und 3 : 1 liegt.

## Claims

1. Contact-optical items, especially contact lenses and scleral lenses, composed of water-absorbing, crosslinked copolymers of olefinically unsaturated monomers, characterized in that the copolymer contains polymerized in 5 to 55 % by weight of a N-vinylamide of the general formula

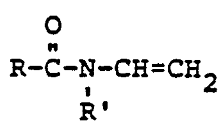

in which R and R′ represent, independently of one another, $C_1$-$C_4$-alkyl groups.

2. Contact-optical items according to Claim 1, characterized in that the copolymer contains 8 to 40 % by weight of the N-vinylamide.

3. Contact-optical items according to Claim 2, characterized in that the copolymer contains up to 35 % by weight of the N-vinylamide.

4. Contact-optical items according to Claim 1 to 3, characterized in that R represents methyl.

5. Contact-optical items according to Claim 1 to 4, characterized in that R′ represents methyl.

6. Contact-optical items according to Claim 1 to 5, characterized in that the copolymer contains as further monomer unit an N-vinyl lactam, especially N-vinylpyrrolidone.

7. Contact-optical items according to Claim 1 to 6, characterized in that the copolymer contains as further monomer unit a methacrylic ester, especially methyl, ethyl, butyl, cyclohexyl, benzyl and/or phenyl methacrylate.

8. Contact-optical items according to Claim 1 to 7, characterized in that 0.01 to 3 % by weight, preferably 0.1 to 2 % by weight, of crosslinkers having at least 2 olefinically unsaturated groups are also used in the preparation of the copolymer.

9. Moulded articles according to Claim 8, characterized in that a combination of (meth)acrylic ester crosslinker and vinyl or allyl crosslinker has been used.

10. Moulded articles according to Claim 9, characterized in that the ratio of the crosslinkers is between 1 : 3 and 3 : 1 by weight.

## Revendications

1. Corps optiques de contact, en particulier lentilles de contact et lentilles sclérales, composés de copolymères hydrophiles réticulés de monomères à insaturation de type oléfinique, caractérisés en ce que le copolymère contient 5 à 55 % en poids d'un N-vinylamide de formule générale

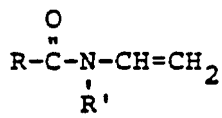

dans laquelle, R et R' représentent, indépendamment l'un de l'autre, un groupe alkyle en $C_1$-$C_4$ inclus par polymérisation.

2. Corps optiques de contact selon la revendication 1, caractérisés en ce que le copolymère contient 8 à 40 % en poids du N-vinylamide.

3. Corps optiques de contact selon la revendication 2, caractérisés en ce que le copolymère contient 10 à 35 % en poids du N-vinylamide.

4. Corps optiques de contact selon les revendications 1 à 3, caractérisés en ce que R représente un méthyle.

5. Corps optiques de contact selon les revendications 1 à 4, caractérisés en ce que R' représente un méthyle.

6. Corps optiques de contact selon les revendications 1 à 5, caractérisés en ce que le copolymère contient, comme autre monomère constitutif, un N-vinyllactame, en particulier la N-vinylpyrrolidone.

7. Corps optiques de contact selon les revendications 1 à 6, caractérisés en ce que le copolymère contient, comme autre monomère constitutif, un ester d'acide méthacrylique, en particulier le méthylméthacrylate, l'éthylméthacrylate, le butylméthacrylate, le cyclohexylméthacrylate, le benzylméthacrylate et/ou le phénylméthacrylate.

8. Corps optiques de contact selon les revendications 1 à 7, caractérisés en ce qu'on a utilisé conjointement, lors de la fabrication du copolymère, 0,01 à 3 % en poids, de préférence 0,1 à 2 % en poids, d'au moins 2 agents de réticulation comportant des groupes à insaturation de type oléfinique.

9. Corps moulés selon la revendication 8, caractérisés en ce qu'on a utilisé une combinaison d'agent de réticulation à base d'ester d'acide (méth)acrylique et d'agent de réticulation vinylique ou allylique.

10. Corps moulés selon la revendication 9, caractérisés en ce que le rapport de poids des agents de réticulation se situe entre 1 : 3 et 3 : 1.